# EUROPÄISCHE PATENTSCHRIFT

(11) **EP 2 226 145 B1**
(45) Veröffentlichungstag und Bekanntmachung des Hinweises auf die Patenterteilung: **29.06.2016**
(21) Anmeldenummer: 10001822.5
(22) Anmeldetag: 23.02.2010
(51) Int. Cl.: B25B 5/10, B23H 9/10, B23H 11/00

(54) **Spannvorrichtung**
Clamping device
Dispositif de serrage

(30) Priorität: 04.03.2009 DE 102009011612
(43) Veröffentlichungstag der Anmeldung: 08.09.2010
(73) Patentinhaber: F. J. Pfeffer Formenbau GmbH, 73249 Wernau/ Neckar (DE)
(72) Erfinder: Pfeffer, Franz-Josef, 73249 Wernau (DE); Pfeffer, Simon, 73249 Wernau (DE)
(74) Vertreter: Ruckh, Rainer Gerhard

(56) Entgegenhaltungen:
- CH-A- 238 881
- DE-A1- 10 063 988
- US-A- 2 365 079
- US-A- 5 860 691
- US-A1- 2003 230 697

## Beschreibung

Die Erfindung betrifft eine Spannvorrichtung.

Dabei bezieht sich die Erfindung insbesondere auf eine Spannvorrichtung für Drahterodiermaschinen. Derartige Drahterodiermaschinen arbeiten nach dem Prinzip der Funkenerosion, wobei mit einem Draht in einem flüssigen Dielektrikum in Werkstücke bestimmte Formen, Konturen und dergleichen eingeschnitten werden. Um bei dieser Bearbeitung die Werkstücke in einer vorgegebenen Bearbeitungsposition zu halten, werden Spannvorrichtungen eingesetzt.

Bekannte hierfür eingesetzte Spannvorrichtungen sind jeweils in Form eines Schraubstocks ausgebildet, bei welchen mittels Spindeln Spannbacken aufeinander zugeführt werden, um die Werkstücke zu spannen.

Ein erster Nachteil dieser Spannvorrichtung besteht darin, dass die Spindeln im Laufe der Zeit verschmutzen und daher in bestimmten Zeitintervallen gereinigt und gewartet werden müssen. Die im Innern der Spannvorrichtung angeordneten Spindeln sind nicht oder nur mit großem Aufwand ausbaubar. Das Reinigen und Warten der Spindeln bringt daher einen großen Zeit- und Kostenaufwand mit sich.

Ein weiterer Nachteil der als Schraubstöcke ausgebildeten Spannvorrichtungen besteht darin, dass deren Bauformen mangelhaft an die Arbeitsprozesse von Drahterodiermaschinen anpassbar sind. Derartige Schraubstöcke bestehen typischerweise aus einem quaderförmigen Grundkörper, der Aussparungen aufweist, in welchen mit Spindeln getriebene Spannbacken bewegbar sind. Generell münden diese Aussparungen an einer senkrechten Seitenwand des quaderförmigen Grundkörpers des Schraubstocks aus. Dort müssen die jeweiligen Werkstücke eingeschoben werden, um sie spannen zu können. Dies bereitet insbesondere bei kleinen und flachen Werkstücken, wie sie mit Drahterodiermaschinen typischerweise bearbeitet werden, erhebliche Probleme. Ein weiteres Problem besteht darin, dass die Komponenten der Drahterodiermaschinen zur Bearbeitung der Werkstücke, insbesondere Düsen, über welche das flüssige Dielektrikum ausgeleitet wird, bei kleinen Werkstücken sehr dicht an die Spannvorrichtung herangeführt werden müssen. Bei als Schraubstöcken ausgebildeten Spannvorrichtungen ist dies jedoch aufgrund des sperrigen, quaderförmigen Grundkörpers nicht oder nur unzureichend möglich.

In der US 5,860,691, welches im Zusammenhang die Merkmale des Oberbegriffs des Anspruchs 1 offenbart, ist eine Spannvorrichtung beschrieben, die zwei mittels einer Spannschraube gegeneinander führbare, gelenkig verbundene Klammern aufweist. An beiden Klammern sind flächige Auflageflächen vorgesehen, welche an einem zu spannenden Werkstück anliegen.

Die DE 100 63 988 A1 betrifft eine Klemmvorrichtung zum Halten von plattenförmigen Werkstücken. Die Klemmvorrichtung umfasst ein Stützelement und ein schwenkbar an diesem gelagertes Klemmelement. Sowohl das Stückelement als auch das Klemmelement weist flächige Auflageflächen zum Klemmen des Werkstücks auf.

Die CH 238 881 A betrifft eine Spannvorrichtung mit einer Backe, die mittels eines Drehlagers an einer Unterlage drehbar gelagert ist. Die Backe und die Unterlage weisen flächige Auflageflächen auf, an welchen ein zu spannendes Werkzeug anliegt.

Der Erfindung liegt die Aufgabe zugrunde, eine Spannvorrichtung bereitzustellen, die einfach und kostengünstig betrieben werden kann und dabei eine hohe Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße Spannvorrichtung besteht aus einer Spannvorrichtung mit den Merkmalen des Anspruchs 1.

Mit der erfindungsgemäßen Spannvorrichtung wird ein hochpräzises Spannen von Werkstücken ermöglicht, wobei sich die Spannvorrichtung insbesondere zum Spannen kleiner Werkstücke eignet. Die Unterbacke und die Klammer als Komponenten der Spannvorrichtung zum Spannen eines Werkstücks sind der Form zweier menschlicher Finger nachempfunden, die einen Gegenstand halten. Dies bedeutet, dass die Unterbacken und die Klammer flach auf das zu spannende Werkstück zulaufen. Dies bringt als wesentlichen Vorteil mit sich, dass am Ort der Einspannung des Werkstücks die Werkstückumgebung nicht durch die Spannvorrichtung versperrt oder verbaut ist, so dass Mittel zur Bearbeitung des Werkstücks unmittelbar an dieses herangeführt werden können.

Die erfindungsgemäße Spannvorrichtung eignet sich somit besonders vorteilhaft für den Einsatz in Drahterodiermaschinen. Der Draht der Drahterodiermaschine sowie die Düsen für das flüssige Dielektrikum als weitere Komponenten der Drahterodiermaschine können somit sehr dicht an die Spannvorrichtung herangeführt werden, so dass auch eine Bearbeitung sehr kleiner Werkstücke ohne weiteres möglich ist.

Ein weiterer wesentlicher Vorteil der erfindungsgemäßen Spannvorrichtung besteht darin, dass mit dieser ein hochpräzises Spannen von Werkstücken ermöglicht wird. Die hierzu verwendete horizontale Auflagefläche der aus nicht rostendem Stahl bestehenden Unterbacke ist hierzu besonders vorteilhaft gehärtet und geschliffen, so dass eine verschleißfreie hochgenaue Auflagefläche erhalten wird, die eine genaue und reproduzierbare Ausrichtung des Werkstücks gewährleistet.

Mit der Vorderkante der Klammer als weiterem Element zum Spannen des Werkstücks wird innerhalb eines großen Spannbereichs, das heißt für unterschiedliche Werkstückhöhen, ein präziserer Spannvorgang erhalten. Wesentlich hierbei ist, dass in dem gesamten Spannbereich die Vorderkante der Klammer exakt oberhalb der Auflagefläche liegt und mit der Vorderkante eine vertikal nach unten, in Richtung der Auflagefläche wirkende Spannkraft erhalten wird. Dies wird insbesondere dadurch erreicht, dass die Vorderkante der Klammer abgerundet ist, wobei der Querschnitt der Vorderkante ein Kreissegment bildet. Damit wird keine flächige sondern eine linienförmige Auflage der Vorderkante der Klammer auf dem Werkstück erhalten.

Der große Spannbereich der Spannvorrichtung ergibt sich insbesondere auch durch die Geometrie der flach bauenden Unterbacke mit der daran schwenkbar angeordneten Klammer, deren Form an die Kontur der Unterbacke angepasst ist, sowie durch das spezifizierte Spannmittel, mittels dessen die Klammer gegen die Unterbacke geführt ist.

Besonders vorteilhaft ist das Spannmittel von einer Schraube gebildet, welche ein Langloch in der Klammer durchsetzt und deren vorderes Ende in einer Gewindebohrung der Unterbacke gelagert ist, so dass durch Betätigen des an der Oberseite der Klammer freiliegenden Kopfs der Schraube die Klammer gegen die Unterbacke führbar ist.

Mit der Schraube als Spannmittel wird nicht nur ein besonders einfaches Spannen des Werkstücks ermöglicht. Ein weiterer wesentlicher Vorteil besteht darin, dass durch dieses Spannmittel ein besonders wartungsfreundlicher Betrieb der Spannvorrichtung gewährleistet ist, da die Schraube, falls diese verschmutzt ist, schnell und einfach ausgetauscht werden kann.

Ein weiterer Vorteil der erfindungsgemäßen Spannvorrichtung besteht in deren modularem Aufbau. Dieser modulare Aufbau wird dadurch erreicht, dass zur Ausbildung einer Schwenkhalterung für wenigstens eine Klammer die Unterbacke eine parallel zu deren Vorderkante verlaufende und an der Grenzfläche der Unterbacke ausmündende zylindrische Ausnehmung aufweist, die eine Aufnahme für ein Zylindersegment wenigstens einer Klammer bildet.

Die zylindrische Ausnehmung kann eine Aufnahme für die Zylindersegmente mehrerer Klammern bilden, das heißt je nach Applikation kann eine unterschiedliche Anzahl von Klammern eingesetzt werden.

Besonders vorteilhaft weisen die zylindrische Ausnehmung und das Zylindersegment jeweils eine Außenkontur in Form eines Kreissegments auf, welches sich über einen Winkelbereich erstreckt, der geringfügig größer als 180° ist wobei sich die zylindrische Ausnehmung über die gesamte Breite der Unterbacke erstreckt und an deren Seitenrändern ausmündet.

Die Klammern können somit zur Montage an der Unterbacke mit ihrem Zylindersegment einfach und schnell seitlich in die zylindrische Ausnehmung eingeschoben werden. Durch die spezifischen Konturen der Zylindersegmente und der zylindrischen Ausnehmung ist gleichzeitig gewährleistet, dass die Zylindersegmente aus der zylindrischen Ausnehmung nicht nach oben herausgehoben werden können, das heißt ein unerwünschtes Herauslösen der Klammern aus der Unterbacke während des Betriebs der Spannvorrichtung wird dadurch vermieden.

Die erfindungsgemäße Spannvorrichtung ist nicht auf den Einsatz in Drahterodiermaschinen begrenzt. Generell kann die Spannvorrichtung in Applikationen eingesetzt werden, wo keine großen Bearbeitungskräfte auf das Werkstück auftreten. Beispielsweise kann die erfindungsgemäße Spannvorrichtung auch in Maschinen zum Senkerodieren von Werkstücken eingesetzt werden.

In einer besonders vorteilhaften Weiterbildung der Erfindung ist der Abstand zwischen der Auflagefläche der Unterbacke und der Vorderkante der oder jeder Klammer dadurch erhöht, dass zwischen der Unterbacke und der oder jeder Klammer ein Adapter vorgesehen ist, wobei der Adapter auf der Unterbacke aufliegend fest mit dieser verbunden ist, und die oder jede Klammer auf der Oberseite des Adapters schwenkbar gelagert ist.

Der Adapter bildet somit ein Zusatzmodul mit dem die Funktionalität der erfindungsgemäßen Spannvorrichtung erweitert werden kann. Durch die Vergrößerung des Abstands zwischen Unterbacke und der oder den Klammern können nun auch größere Werkstücke gespannt werden. Durch die Verwendung mehrere Adapter mit unterschiedlichen Bauhöhen, die einzeln in der Spannvorrichtung integriert werden können, kann ein breites Spektrum von Werkstücken unterschiedlicher Größen gespannt werden.

Der Einbau des Adapters in die Spannvorrichtung kann dadurch besonders einfach bewerkstelligt werden, dass dieser Adapter an seiner Unterseite ein Zylindersegment aufweist, das anstelle der Zylindersegmente der Klammern in eine Ausnehmung der Unterbacke eingesetzt werden kann und an seiner Oberseite eine Ausnehmung aufweist, in welche die Zylindersegmente der Klammern eingesetzt werden können. Somit ergibt sich ein modularer Aufbau der Spannvorrichtung, der es ermöglicht, ohne zusätzliche Adaptionen wahlweise die Klammern direkt auf die Unterbacke oder unter Zwischenlagerung eines Adapters anzubringen. Bei einer Mehrfachanordnung von Klammern an der Unterbacke ist es generell auch möglich, einen Adapter einzusetzen, der nur einen Teil der Klammern aufnimmt, während die restlichen Klammern direkt auf der Unterbacke aufsitzen.

Besonders vorteilhaft weist der Adapter eine ebene Frontseite auf, welche eine Anschlagfläche für das auf der Auflagefläche aufliegende Werkstück bildet.

Dabei weist der Adapter einen Magneten auf, welcher an der Frontseite des Adapters freiliegt.

Durch die Ausbildung der Frontseite des Adapters als Anschlagfläche wird das korrekte Ausrichten des Werkstücks erheblich erleichtert. Der in der Frontseite integrierte Magnet bietet als weiteren Vorteil, dass damit das Werkstück bereits in der Sollposition, in der das Spannen erfolgen soll, fixiert ist.

Die Erfindung wird im Folgenden anhand der Zeichnungen erläutert. Es zeigen:
- Figur 1:: Perspektivische Darstellung eines Ausführungsbeispiels der erfindungsgemäßen Spannvorrichtung mit einer Unterbacke und zwei darauf angeordneten Klammern.
- Figur 2:: Seitenansicht der Spannvorrichtung gemäß Figur 1.
- Figur 3:: Seitenansicht der Spannvorrichtung gemäß Figur 1 mit zugeordneten Komponenten einer Drahterodiermaschine.
- Figur 4:: Einzeldarstellung der Unterbacke der Spannvorrichtung gemäß den Figuren 1 bis 3.
- Figur 5:: Seitenansicht der Spannvorrichtung gemäß Figur 1 ohne Werkstück.
- Figur 6:: Vergrößerte Detaildarstellung der Anordnung gemäß Figur 5.
- Figur 7:: Perspektivische Darstellung der Spannvorrichtung gemäß den Figuren 1 bis 6 mit einem zwischen der Unterbacke und den Klammern liegenden Adapter.
- Figur 8:: Seitenansicht der Anordnung gemäß Figur 7.
- Figur 9:: Einzeldarstellung des Adapters gemäß den Figuren 7 und 8.

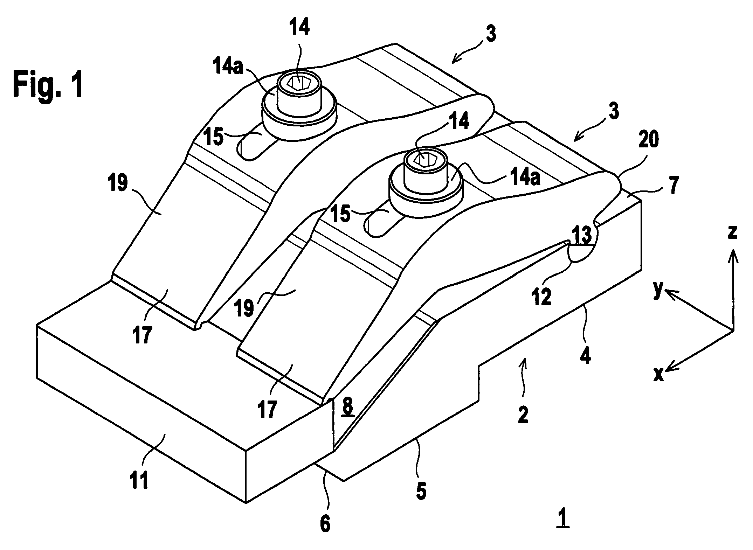

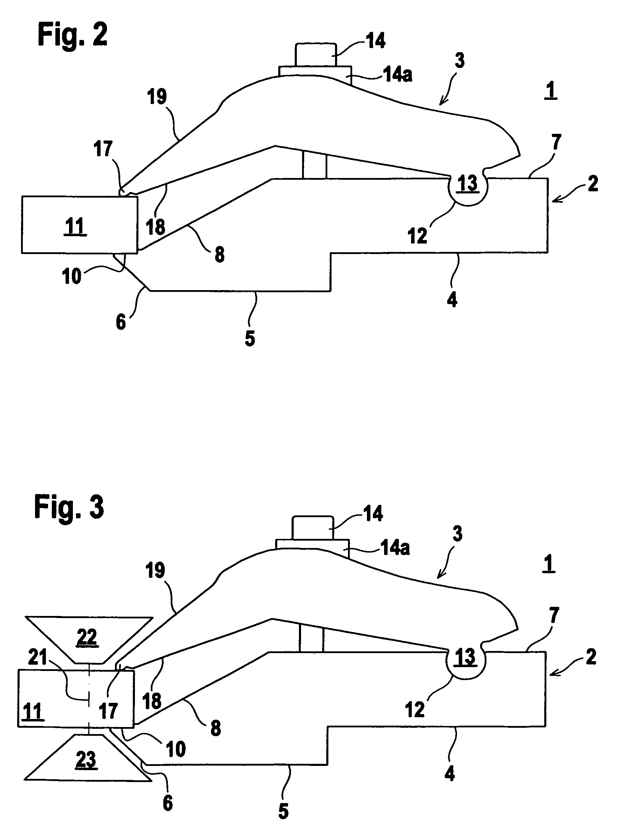

Die Figuren 1 und 2 zeigen ein Ausführungsbeispiel der erfindungsgemäßen Spannvorrichtung 1. Im vorliegenden Fall wird die Spannvorrichtung 1 für eine Drahterodiermaschine eingesetzt. Figur 3 zeigt die Spannvorrichtung 1 mit Komponenten einer solchen Drahterodiermaschine.

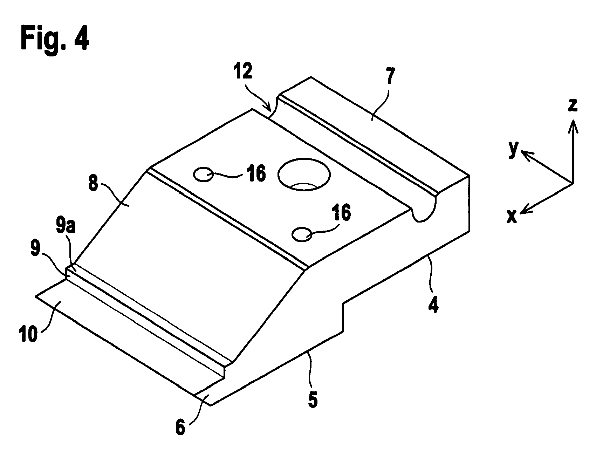

Die in den Figuren 1 bis 3 dargestellte Spannvorrichtung 1 umfasst eine Unterbacke 2 und zwei auf der Oberseite der Unterbacke 2 angeordnete, an dieser schwenkbar gelagerte Klammern 3. Die Klammern 3 sind im vorliegenden Fall identisch ausgebildet. Generell kann die Spannvorrichtung 1 auch eine Unterbacke 2, an welcher nur eine oder mehr als zwei Klammern 3 angeordnet sind, aufweisen. Die Unterbacke 2 ist in Figur 4 in einer Einzeldarstellung dargestellt.

Die Unterbacke 2 und die Klammern 3 bestehen jeweils aus nicht rostendem Stahl. Wie insbesondere aus den Figuren 3 und 4 ersichtlich ist, bildet die Unterbacke 2 ein flaches, massives Bauteil, dessen Querschnitt in y-Richtung konstant ist. An der Unterseite weist die Unterbacke 2 eine in einer horizontalen Ebene (das heißt in einer x-y-Ebene) verlaufende Anlegfläche 4 auf, mit welcher die Unterbacke 2 auf einem Aufspanntisch der Drahterodiermaschine positionierbar und fixierbar ist. An der Unterseite ist, durch einen Absatz von der Anlegfläche 4 nach unten abgesetzt, eine weitere, in einer horizontalen Ebene verlaufende Fläche 5 vorgesehen. Am vorderen Ende der Unterbacke 2 weist diese eine an die Fläche 5 angrenzende Abschrägung 6 auf.

Im Bereich der Anlegfläche 4 weist die Unterbacke 2 an ihrer Oberseite eine, in einer horizontalen Ebene, Grenzfläche 7 auf, an welche zur Vorderseite hin eine Schrägfläche 8 anschließt. An die vordere Kante der Schrägfläche 8 schließt, durch einen Absatz 9 getrennt, eine in einer horizontalen Ebene verlaufende Auflagefläche 10 an, auf welche ein zu spannendes Werkstück 11 aufgelegt werden kann, wie aus den Figuren 1 bis 3 ersichtlich ist. Dabei geht der Absatz 9 nicht direkt in die Schrägfläche 8 über, sondern ist von dieser durch einen schmales Flächensegment 9a getrennt, das in einer Ebene parallel zur Auflagefläche 10 verläuft.

Die Auflagefläche 10 erstreckt sich über die gesamte Breite der Unterbacke 2, wobei deren Form über die gesamte Breite der Unterbacke 2 konstant ist. Die Auflagefläche 10 ist gehärtet und geschliffen und bildet so eine reproduzierbare, verschleißfreie Auflage für das Werkstück 11. Dabei liegt die Auflagefläche 10 in derselben Ebene wie die Anlegefläche 4. Damit bleibt der durch die Anlegefläche 4 definierte Maschinennullpunkt für die Auflagefläche 10 und damit das dort aufliegende Werkstück 11 erhalten.

Die Klammern 3 bilden langgestrecke Bauteile mit parallel in x-Richtung verlaufende Längsachsen. Die Klammern 3 sind jeweils mit einer Schwenkhalterung an der Unterbacke 2 schwenkbar gelagert. Zur Ausbildung der Schwenkhalterungen weist die Unterbacke 2 eine zylindrische Ausnehmung 12 als Aufnahme für an den Unterseiten der Klammern 3 vorgesehene Zylindersegmente 13 auf. Die zylindrische Aufnahme erstreckt sich in y-Richtung über die gesamte Breite der Unterbacke 2 und mündet an deren Seitenwänden aus. Die zylindrische Aufnahme weist einen über ihre gesamte Länge konstanten Querschnitt auf, wobei der Querschnitt ein Kreissegment bildet, welches sich über einen Winkelbereich erstreckt, der geringfügig größer ist als 180°. Die Konturen der Zylindersegmente 13 sind exakt an die Kontur der zylindrischen Aufnahme angepasst, das heißt auch die Zylindersegmente 13 weisen jeweils einen über ihre Länge konstanten Querschnitt in Form eines Kreissegments auf. Die Zylindersegmente 13 der Klammern 3 können zur Montage der Spannvorrichtung 1 seitlich in die zylindrische Aufnahe eingeschoben werden. Da sich der kreisförmige Querschnitt der zylindrischen Aufnahme über einen Winkelbereich größer als 180° erstreckt, können die Zylindersegmente 13 nicht in z-Richtung aus der zylindrischen Aufnahme herausgehoben werden.

Zwischen dem Kopf der Schraube 14 und dem deren Rand des Langlochs 15 ist eine Gleitscheibe 14a vorgesehen, die eine Unterlagsscheibe bildet. Dabei ist die Kontur der Unterseite der Gleitscheibe 14a an die Kontur der Oberseite der Klammer 3 im Bereich des Langlochs angepasst, so dass die Gleitscheibe 14a dort flächig aufliegt, und zwar für beliebige Positionen der Schraube 14 innerhalb des Langlochs 15.

Zur Betätigung der Spannvorrichtung 1 ist an jeder Klammer 3 als Spannmittel eine Schraube 14 vorgesehen. Jede Schraube 14 durchsetzt ein Langloch 15 in der jeweiligen Klammer 3 und greift in eine an der Grenzfläche 7 der Unterbacke 2 ausmündende Gewindebohrung 16. Durch Betätigen des an der Oberseite der Klammer 3 beiliegenden Kopfs der Schraube 14 kann die jeweilige Klammer 3 gegen die Unterbacke 2 geführt werden, um das Werkstück 11 zu spannen. Die Längsrichtung des Langlochs 15 verläuft in Längsrichtung der Klammer 3, wo durch Verkippungen der Klammer 3 in deren Längsrichtung beim Spannvorgang aufgenommen werden und die Schraube 14 nicht im Langloch 15 verklemmt. Zur Generierung einer Rückstellkraft bei Betätigen der Schraube 14 kann das Segment der Schraube 14, das zwischen Klammer 3 und Unterbacke 2 liegt, von einer Feder umgeben sein.

Zwischen dem Kopf der Schraube 14 und dem oberen Rand des Langlochs 15 ist eine Gleitscheibe 14a vorgesehen, die eine Unterlagsscheibe bildet. Dabei ist die Kontur der Unterseite der Gleitscheibe 14a an die Kontur der Oberseite der Klammer 3 im Bereich des Langlochs 15 angepasst, so dass die Gleitscheibe 14a dort flächig aufliegt, und zwar für beliebige Positionen der Schraube 14 innerhalb des Langlochs 15.

Das Langloch 15 zur Aufnahme der Schraube 14 liegt, wie insbesondere aus den Figuren 2 und 3 ersichtlich, im Bereich der Mitte der Klammer 3 zwischen dem Zylindersegment 13 im hinteren Bereich der Klammer 3 und der Vorderkante 17 der Klammer 3, die zum Spannen des Werkstücks 11 verwendet wird.

Die Vorderkanten 17 der Klammer 3 verlaufen senkrecht zu den Längsachsen der Klammer 3 und damit parallel zur Längsachse der Auflagefläche 10 der Unterbacke 2. Wie insbesondere aus den Figuren 2 und 3 ersichtlich, ist die Vorderkante 17 jeder Klammer 3 abgerundet, wobei die jeweilige Vorderkante 17 einen kreissegmentförmigen Querschnitt aufweist.

Wie aus den Figuren 1 bis 3 ersichtlich, wird ein zu spannendes Werkstück 11 auf die Auflagefläche 10 der Unterbacke 2 aufgelegt und dann mit der Vorderkante 17 jeder Klammer 3 fixiert. Durch die Abrundung der Vorderkante 17 der Klammer 3 ist gewährleistet, dass keine flächige sondern eine exakt linienförmige Auflage der Vorderkante 17 der Klammer 3 auf dem Werkstück 11 erhalten wird und damit eine exakt in z-Richtung gegen die Auflagefläche 10 wirkende Spannkraft, was ein präzises Spannen des Werkstücks 11 ermöglicht. Die Präzision des Spannvorgangs wird durch die horizontale Auflagefläche 10 der Unterbacke 2 gefördert. Zum Spannen größerer Werkstücke 11 kann es sinnvoll sein, wenn die Auflagefläche 10 zum vorderen Rand der Unterbacke 2 hin um Bruchteile eines Grads ansteigt.

Wie aus den Figuren 1 bis 3 ersichtlich ist die Kontur jeder Klammer 3 an die Kontur der Unterbacke 2, insbesondere an die Kontur der Oberseite der Unterbacke 2 angepasst. Insbesondere ist das Vorderteil einer Klammer 3 an die darunterliegende Schrägfläche 8 der Unterbacke 2 dadurch angepasst, dass das Vorderteil von zwei in spitzem Winkel aufeinander zulaufenden ebenen Flächen 18, 19 begrenzt ist.

Schließlich weist jede Klammer 3 einen Anschlag 20 zur Begrenzung der Aufspannweite der Klammer 3 auf. Dieser Anschlag 20 ist an der Unterseite des hinteren Randbereichs der Klammer 3, der über das Zylindersegment 13 hervorsteht, vorgesehen.

Mit der Spannvorrichtung 1 gemäß den Figuren 1 bis 4 können Werkstücke 11 innerhalb eines großen Spannbereichs gespannt werden, das heißt es können Werkstücke 11 unterschiedlicher Höhen gespannt werden. Zum Spannen der Werkstücke 11 werden diese auf die Auflagefläche 10 aufgelegt, dann werden durch Betätigen der Schrauben 14 die Klammern 3 nach unten gegen die Unterbacke 2 geschwenkt und dadurch die Vorderkanten 17 der Klammern 3 gegen die Oberseite des Werkstücks 11 geführt.

Die Spannvorrichtung 1 eignet sich insbesondere zum Einsatz in Drahterodiermaschinen. Wie aus Figur 4 ersichtlich können die für die Funkenerosion benötigten Komponenten, nämlich ein oder mehrere Drähte 21 sowie Düsen 22, 23 für ein flüssiges Dielektrikum, sehr dicht an die Spannvorrichtung 1 herangeführt werden, so dass auch eine Bearbeitung sehr flacher, kleiner Werkstücke 11 möglich ist.

Durch die flache Konstruktion der Klammern 3, insbesondere deren Vorderteile, können obere Düsen 22 unmittelbar in dem Bereich der Vorderteile der Klammern 3 angeordnet werden. Entsprechend können untere Düsen 23 direkt unterhalb des vorderen Endes der Unterbacke 2 angeordnet werden, wobei die Abschrägung 6 am vorderen Ende der Unterbacke 2 ein sehr dichtes Heranführen der Düsen 23 an die Unterbacke 2 ermöglicht.

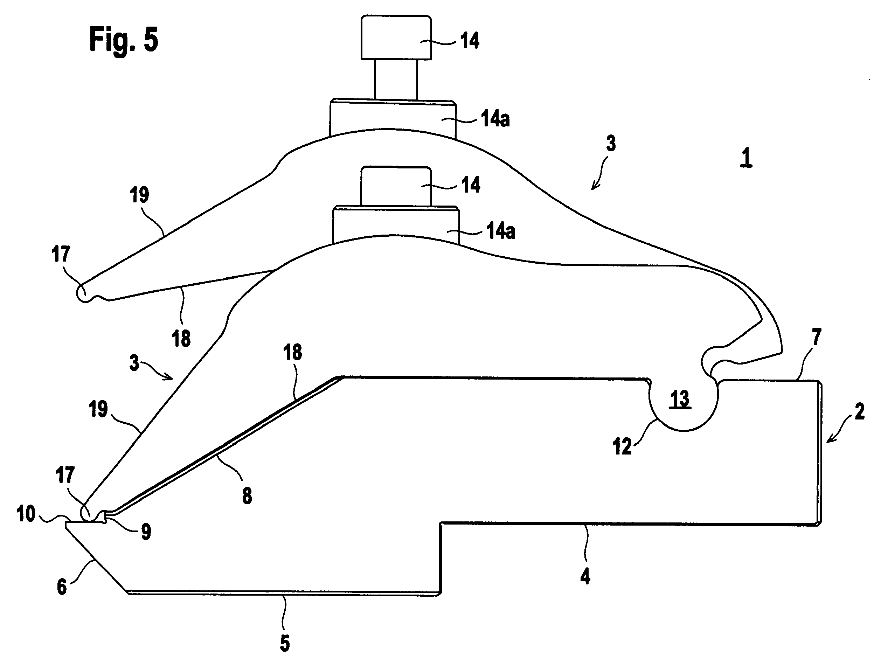

Figur 5 zeigt die Spannvorrichtung 1 gemäß den Figuren 1 bis 4 bei entferntem Werkstück 11. Dabei ist die hintere Klammer 3 noch von der Unterbacke 2 abgehoben, während die vordere Klammer 3 durch Anziehen der Schraube 14 gegen die Unterbacke 2 gedrückt ist, so dass die Unterseite der Klammer 3 mit Ausnahme der Vorderkante 17 dicht auf der Oberseite der Unterbacke 2 anliegt.

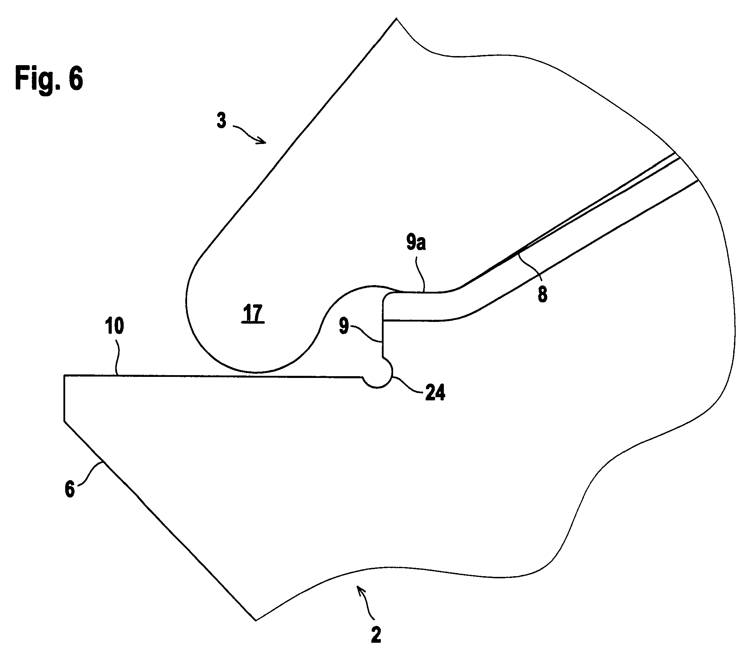

Der Bereich der Vorderkante 17 der auf der Unterbacke 2 aufliegenden Klammer 3 ist in Figur 6 in einer Detaildarstellung vergrößert dargestellt. Wie aus Figur 6 ersichtlich, schließt an den Absatz 9 der Unterbacke 2 das in einer horizontalen Ebene orientierte, schmale Flächensegment 9a an, das dann in die Schrägfläche 8 übergeht. Wie aus Figur 6 weiter ersichtlich, liegt der an die abgerundete Vorderkante 17 anschließende Randbereich der Klammer 3 auf dem Flächensegment 9a und der Schrägfläche 8 auf, während die Vorderkante 17 über den Absatz 9 hervorsteht und in geringem Abstand zur Auflagefläche 10 liegt. Damit wird vermieden, dass bei Aufsetzen der Klammer 3 auf die Oberseite der Unterbacke 2 die Vorderkante 17 gegen die Auflagefläche 10 gepresst wird, so dass Beschädigungen oder Beeinträchtigungen dieser Komponenten vermieden werden.

Wie aus Figur 6 ersichtlich, ist die Grenze zwischen Absatz 9 und Auflagefläche 9 nicht als eine exakte Kante ausgebildet. Vielmehr ist dort ein Freischnitt 24 vorgesehen. Dadurch wird erreicht, dass Werkstücke 11, die ihrerseits exakt linienförmige Kanten aufweisen, dicht und spielfrei an den Absatz 9 und die Auflagefläche 10 angelegt werden können, so dass ein exaktes Positionieren des Werkstücks 11 möglich ist.

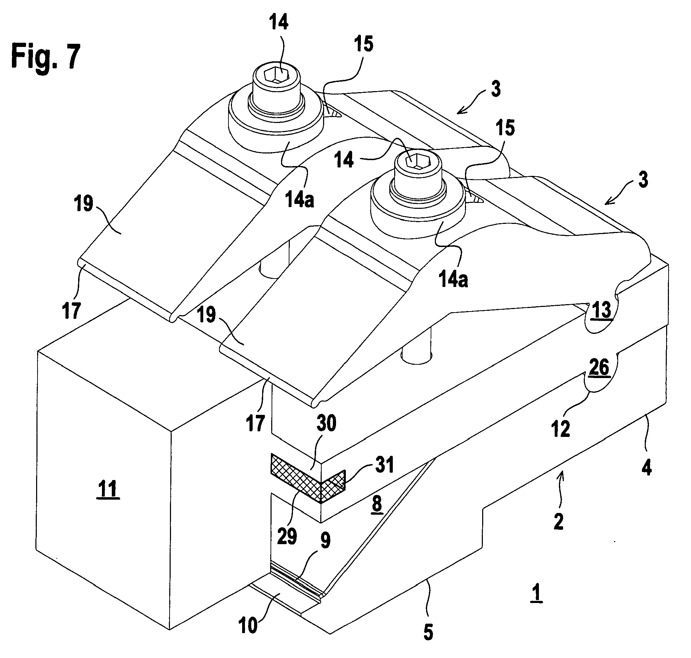

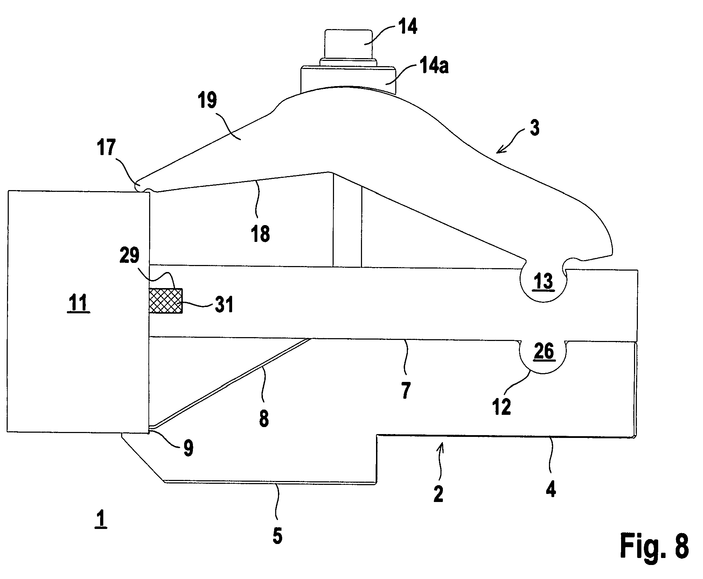

Die Figuren 7 und 8 zeigen eine Erweiterung der Spannvorrichtung (1) der Figuren 1 bis 6. Die Spannvorrichtung (1) der Figuren 7 und 8 weist als zusätzliches Modul einen Adapter (25) auf, der zwischen der Unterbacke (2) und den Klammern (3) angeordnet ist.

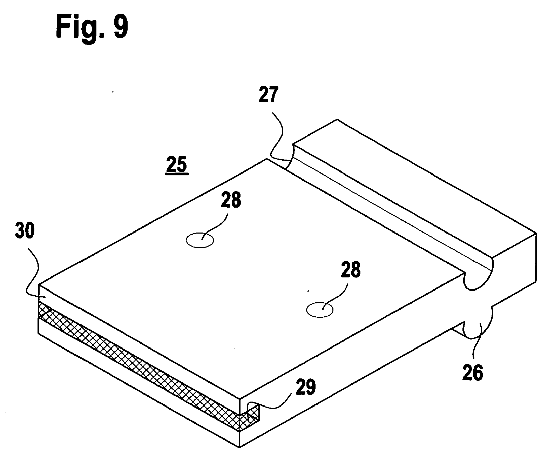

Der Adapter, der in Figur 9 in einer Einzeldarstellung dargestellt ist, ist als Massivteil ausgebildet, das an seiner Unterseite ein Zylindersegment (26) aufweist, dass hinsichtlich seiner Kontur dem Zylindersegment (13) der Klammern (3) entspricht. An der Oberseite des Adapters (25) ist eine Ausnehmung (27) vorgesehen, die der Ausnehmung (12) der Unterbacke (2) entspricht. Weiterhin weist der Adapter (25) an seiner Oberseite ausmündende Gewindebohrungen (28) auf, welche den Gewindebohrungen (16) der Unterbacke (2) entsprechen. Schließlich weist der Adapter (25) eine Aussparung (29) auf, die an dessen Frontseite (30) ausmündet und sich über die gesamte Breite des Adapters (25) abschließt. In die Aussparung (29) ist ein Magnet (31) eingesetzt. Der Magnet (31) schließt bündig mit der Frontseite (30) ab und bildet mit dieser eine ebene Fläche.

Die Konfiguration der Spannvorrichtung (1) von Figur 1 kann in die Konfiguration der Figuren 7 und 8 einfach dadurch umgewandelt werden, dass die Klammern (3) von der Unterbacke (2) abgenommen werden und dann der Adapter (25) auf der Unterbacke (2) befestigt wird, indem das Zylindersegment (26) des Adapters (25) in die Ausnehmung (12) der Unterbacke (2) eingerührt wird. Anschließend werden die Zylindersegmente (13) der Klammern (3) in die Ausnehmung (27) des Adapters (25) eingeführt. Prinzipiell kann dies wiederum durch seitliches Einschieben der Zylindersegmente (13) der Klammern (3) in die Ausnehmung (27) des Adapters erfolgen. Bei der Ausführungsform der Figuren 7 und 8 sind die Konturen der Zylindersegmente (13) der Klammern (3) gegenüber der Ausführungsform der Figuren 1 bis 6 dahin abgeändert, dass die Zylindersegmente (13) von oben in die Ausnehmung (27) eingeführt werden können und dann durch Drehen in ihre Arbeitspositionen dort lagefixiert werden.

Die Klammern (3) sind dann schwenkbar am Adapter (25) gelagert, wobei die Spannvorgänge wieder durch Betätigen der Schrauben (14) erfolgt, wobei diese nun in die Gewindebohrung (28) des Adapters (25) greifen.

Wie aus dem Vergleich der Figuren 7 und 1 deutlich ersichtlich ist, wird durch den Adapter (25) der Abstand zwischen den Klammern (3) und der Unterbacke (2) erhöht, so dass nun Werkstücke (11) mit deutlich größeren Bauhöhen gespannt werden können.

Wie aus Figur 8 ersichtlich, schließt bei auf der Unterbacke (2) befestigtem Adapter (25) dessen Frontseite (30) bündig mit dem Absatz 9 der Unterbacke (2) ab. Damit bildet die Frontseite (30) eine Anschlagfläche für das Werkstück, dessen ebene Vorderseite bei Anlegen an die Frontseite (30) bereits korrekt am Anschlag (9) anliegt. Durch den Magneten (31) an der Frontseite (30) des Adapters (25) wird das Werkstück sicher in dieser Sollposition gehalten, so dass dann der Spannvorgang mit den Klammern (3) durchgeführt werden kann.

### Bezugszeichenliste

- (1): Spannvorrichtung
- (2): Unterbacke
- (3): Klammer
- (4): Anlegfläche
- (5): Fläche
- (6): Abschrägung
- (7): Grenzfläche
- (8): Schrägfläche
- (9): Absatz
- (9a): Flächensegment
- (10): Auflagefläche
- (11): Werkstück
- (12): Ausnehmung
- (13): Zylindersegment
- (14): Schraube
- (14a): Gleitscheibe
- (15): Langloch
- (16): Gewindebohrung
- (17): Vorderkante
- (18): Fläche
- (19): Fläche
- (20): Anschlag
- (21): Draht
- (22): Düse
- (23): Düse
- (24): Freischnitt
- (25): Adapter
- (26): Zylindersegment
- (27): Ausnehmung
- (28): Gewindebohrung
- (29): Aussparung
- (30): Frontseite
- (31): Magnet

## Patentansprüche

1. Spannvorrichtung (1) mit einer Unterbacke (2), welche an ihrer Unterseite eine in einer Ebene verlaufende Anlegfläche (4) zur Auflage auf einer Unterlage aufweist, wobei an der Vorderkante der Unterbacke (2) eine zumindest näherungsweise parallel zur Anlegfläche (4) verlaufende Auflagefläche (10) für ein zu spannendes Werkstück (11) vorgesehen ist, mit wenigstens einer oberhalb der Unterbacke (2) angeordneten Klammer (3), die im Bereich ihres hinteren Endes schwenkbar an der Oberseite der Unterbacke (2) gelagert ist und mit einem Spannmittel, wobei die Unterbacke, die Klammer und das Spannmittel so angeordnet sind, dass durch Betätigen des Spannmittels die Klammer (3) gegen die Oberseite der Unterbacke (2) geführt ist, wodurch die Vorderkante (17) der Klammer (3) gegen die Oberseite des auf der Auflagefläche (10) liegenden Werkstücks (11) gepresst ist, wobei die Form der Unterbacke (2) an die Form der Klammer (3) angepasst ist, und wobei innerhalb eines Spannbereichs mit der Vorderkante der Klammer (3) eine in Richtung der Auflagefläche (10) und senkrecht zu dieser gerichtete wirkende Spannkraft erhalten wird, **dadurch gekennzeichnet, dass** die Unterbacke (2) an ihrer Oberseite eine an die Auflagefläche (10) angrenzende Schrägfläche (8) sowie eine an die Schrägfläche (8) angrenzende, parallel zur Anlegfläche (4) verlaufende Grenzfläche (7), aufweist und dass zur Ausbildung einer Schwenkhalterung für wenigstens eine Klammer (3) die Unterbacke (2) eine parallel zu deren Vorderkante (17) verlaufende und an der Grenzfläche (7) der Unterbacke (2) ausmündende zylindrische Ausnehmung (12) aufweist, die eine Aufnahme für ein Zylindersegment (13) wenigstens einer Klammer (3) bildet, dass die zylindrische Ausnehmung (12) und das Zylindersegment (13) jeweils eine Außenkontur in Form eines Kreissegments aufweisen, welches sich über einen Winkelbereich erstreckt, der geringfügig größer als 180° ist, und dass sich die zylindrische Ausnehmung (12) über die gesamte Breite der Unterbacke (2) erstreckt und an deren Seitenrändern ausmündet, wobei die zylindrische Ausnehmung (12) eine Aufnahme für die Zylindersegmente (13) mehrerer Klammern (3) bildet.

2. Spannvorrichtung nach Anspruch 1, **dadurch gekennzeichnet, dass** das Spannmittel von einer Schraube (14) gebildet ist, welche ein Langloch (15) in der Klammer (3) durchsetzt und deren vorderes Ende in einer Gewindebohrung (16) der Unterbacke (2) gelagert ist, so dass durch Betätigen des an der Oberseite der Klammer (3) freiliegenden Kopfs der Schraube (14) die Klammer (3) gegen die Unterbacke (2) führbar ist.

3. Spannvorrichtung nach einem der Ansprüche 1 oder 2, **dadurch gekennzeichnet, dass** die Längsachse der oder jeder der an der Unterbacke (2) schwenkbar gelagerten Klammer (3) senkrecht zur Längsachse der Vorderkante (17) der Unterbacke (2) verläuft.

4. Spannvorrichtung nach Anspruch 3, **dadurch gekennzeichnet, dass** die Längsachse des Langlochs (15) einer Klammer (3) durch welches die oder eine Schraube (14) geführt ist, in Längsrichtung der Klammer (3) verläuft und mittig zwischen dem Zylindersegment (13) und der Vorderkante (17) der Klammer (3) angeordnet ist.

5. Spannvorrichtung nach einem der Ansprüche 3 oder 4, **dadurch gekennzeichnet, dass** die Längsachsen der Vorderkante (17) und des Zylindersegments (13) einer Klammer (3) senkrecht zu deren Längsachse verlaufen.

6. Spannvorrichtung nach einem der Ansprüche 1 bis 5, **dadurch gekennzeichnet, dass** der Vorderteil einer Klammer (3) von zwei in spitzem Winkel auf die Vorderkante (17) zulaufenden ebenen Flächen (18, 19) begrenzt ist, und dass der Vorderteil der Klammer (3) oberhalb der Schrägfläche (8) der Unterbacke (2) angeordnet ist, wobei die Neigung der Schrägfläche (8) und die Form des Vorderteils aneinander angepasst sind.

7. Spannvorrichtung nach Anspruch 6, **dadurch gekennzeichnet, dass** die Vorderkante (17) der Klammer (3) abgerundet ist, wobei der Querschnitt der Vorderkante (17) ein Kreissegment bildet.

8. Spannvorrichtung nach einem der Ansprüche 6 oder 7, **dadurch gekennzeichnet, dass** die Unterseite des an das Zylindersegment (13) anschließenden hinteren Randbereichs einer Klammer (3) einen Anschlag (20) zur Begrenzung der Aufspannweite der Klammer (3) bildet.

9. Spannvorrichtung nach einem der Ansprüche 1 bis 8, **dadurch gekennzeichnet, dass** der Abstand zwischen der Auflagefläche (10) der Unterbacke (2) und der Vorderkante (17) der oder jeder Klammer (3) dadurch erhöht ist, dass zwischen der Unterbacke (2) und der oder jeder Klammer (3) ein Adapter (25) vorgesehen ist.

10. Spannvorrichtung nach Anspruch 9, **dadurch gekennzeichnet, dass** der Adapter (25) auf der Unterbacke (2) aufliegend fest mit dieser verbunden ist, und dass die oder jede Klammer (3) auf der Oberseite des Adapters (25) schwenkbar gelagert ist.

11. Spannvorrichtung nach einem der Ansprüche 9 oder 10, **dadurch gekennzeichnet, dass** der Adapter (25) eine ebene Frontseite (30) aufweist, welche eine Anschlagfläche für das auf der Auflagefläche (10) aufliegende Werkstück (11) bildet.

12. Spannvorrichtung nach Anspruch 11, **dadurch gekennzeichnet, dass** der Adapter (25) einen Magneten (31) aufweist, welcher an der Frontseite (30) des Adapters (25) freiliegt.

## Claims

1. Clamping device (1) with an lower jaw (2), which has at its underside a bearing surface (4), which extends in a plane, for resting on a support, wherein provided at the front edge of the lower jaw (2) is a support surface (10), which extends at least approximately parallel to the bearing surface (4), for a workpiece (11) to be clamped, with at least one clamp (3), which is arranged above the lower jaw (2) and which is pivotably mounted in the region of its rear end on the upper side of the lower jaw (2), and with tightening means, wherein the lower jaw, the clamp and the tightening means are so arranged that through actuation of the tightening means the clamp (3) is led towards the upper side of the lower jaw (2), whereby the front edge (17) of the clamp (3) is pressed against the upper side of the workpiece (11) lying on the support surface (10), wherein the shape of the lower jaw (2) is matched to the shape of the clamp (3) and wherein a clamping force acting in the direction of the support surface (10) and directed perpendicularly thereto is supplied within a clamping region by the front edge of the clamp (3), **characterised in that** the lower jaw (2) has at its upper side an inclined surface (8) adjoining the support surface (10) as well as a boundary surface (7) adjoining the inclined surface (8) and extending parallel to the bearing surface (4), and that for formation of a pivot mount for at least one clamp (3) the lower jaw (2) has a cylindrical recess (12), which extends parallel to the front edge (17) of the clamp and opens at the boundary surface (7) of the lower jaw (2) and which forms a receptacle for a cylinder segment (13) of at least one clamp (3), that the cylindrical recess (12) and the cylinder segment (13) each have an outer contour in the form of a segment of a circle which extends over an angular range slightly larger than 180°, and that the cylindrical recess (12) extends over the entire width of the lower jaw (2) and opens at the side edges thereof, wherein the cylindrical recess (12) forms a receptacle for the cylinder segments (13) of a plurality of clamps (3).

2. Clamping device according to claim 1, **characterised in that** the tightening means is formed by a screw (14), which penetrates a slot (15) in the clamp (3) and the front end of which is mounted in a threaded bore (16) of the lower jaw (2) so that through actuation of the head, which is exposed at the upper side of the clamp (3), of the screw (14) the clamp (3) can be led towards the lower jaw (2).

3. Clamping device according to one of claims 1 and 2, **characterised in that** the longitudinal axis of the or each clamp (3) pivotably mounted on the lower jaw (2) extends perpendicularly to the longitudinal axis of the front edge (17) of the lower jaw (2).

4. Clamping device according to claim 3, **characterised in that** the longitudinal axis of the slot (15) of a clamp (3) through which the or a screw (14) is led extends in longitudinal direction of the clamp (3) and is arranged centrally between the cylinder segment (13) and the front edge (17) of the clamp (3).

5. Clamping device according to one of claims 3 and 4, **characterised in that** the longitudinal axes of the front edge (17) and of the cylinder segment (13) of a clamp (3) extend perpendicularly to the longitudinal axis of that clamp.

6. Clamping device according to any one of claims 1 to 5, **characterised in that** the front part of a clamp (3) is bounded by two planar surfaces (18, 19) tapering at an acute angle towards the front edge (17) and that the front part of the clamp (3) is arranged above the inclined surface (8) of the lower jaw (2), wherein the inclination of the inclined surface (8) and the shape of the front part are matched to one another.

7. Clamping device according to claim 6, **characterised in that** the front edge (17) of the clamp (3) is rounded, wherein the cross-section of the front edge (17) forms a segment of a circle.

8. Clamping device according to one of claims 6 and 7, **characterised in that** the underside of the rear edge region, which is connected with the cylinder segment (13), of a clamp (3) forms an abutment (20) for limitation of the opening width of the clamp (3).

9. Clamping device according to any one of claims 1 to 8, **characterised in that** the spacing between the support surface (10) of the lower jaw (2) and the front edge (17) of the or each clamp (3) is increased **in that** an adapter (25) is provided between the lower jaw (2) and the or each clamp (3).

10. Clamping device according to claim 9, **characterised in that** the adapter (25) resting on the lower jaw (2) is fixedly connected therewith and that the or each clamp (3) is pivotably mounted on the upper side of the adapter (25).

11. Clamping device according to one of claims 9 and 10, **characterised in that** the adapter (25) has a planar front side (30) which forms an abutment surface for the workpiece (11) resting on the support surface (10).

12. Clamping device according to claim 11, **characterised in that** the adapter (25) comprises a magnet (31) which is exposed at the front side (30) of the adapter (25).

## Revendications

1. Dispositif de serrage (1) comprenant une mâchoire inférieure (2) qui présente, à sa face inférieure, une surface d'engagement (4) s'étendant dans un plan et conçue pour venir en applique contre un support sous-jacent, une surface d'appui (10) dévolue à une pièce (11) à abloquer, s'étendant au moins à peu près parallèlement à ladite surface d'engagement (4), étant prévue sur le bord antérieur de ladite mâchoire inférieure (2) ; au moins un crampon (3) placé au-dessus de la mâchoire inférieure (2) et monté à pivotement, dans la région de son extrémité postérieure, sur la face supérieure de ladite mâchoire inférieure (2) ; et un moyen de serrage, ladite mâchoire inférieure, ledit crampon et ledit moyen de serrage étant agencés de façon telle que le crampon (3) soit guidé vers ladite face supérieure de ladite mâchoire inférieure (2) par actionnement dudit moyen de serrage, pressant ainsi l'arête antérieure (17) dudit crampon (3) contre la face supérieure de la pièce (11) reposant sur la surface d'appui (10), sachant que la forme de ladite mâchoire inférieure (2) est adaptée à la forme dudit crampon (3) et sachant qu'une force de serrage, agissant dans la direction de ladite surface d'appui (10) et orientée perpendiculairement à celle-ci, est appliquée à l'aide de l'arête antérieure dudit crampon (3) dans les limites d'une zone de serrage,
**caractérisé par le fait**
**que** la mâchoire inférieure (2) comporte, à sa face supérieure, une surface inclinée (8) attenante à la surface d'appui (10), ainsi qu'une surface de délimitation (7) limitrophe de ladite surface inclinée (8) et s'étendant parallèlement à la surface d'engagement (4) ; par le fait que, pour former un support de pivotement dédié à au moins un crampon (3), ladite mâchoire inférieure (2) est pourvue d'un évidement cylindrique (12) qui s'étend parallèlement à l'arête antérieure (17) dudit crampon, débouche au niveau de la surface de délimitation (7) de ladite mâchoire inférieure (2), et matérialise un logement assigné à un segment cylindrique (13) d'au moins un crampon (3) ; par le fait que ledit évidement cylindrique (12) et ledit segment cylindrique (13) sont respectivement dotés d'un profil extérieur revêtant la forme d'un segment de cercle qui s'étend sur une plage angulaire légèrement supérieure à 180° ; et par le fait que l'évidement cylindrique (12) s'étend sur toute la largeur de ladite mâchoire inférieure (2) et débouche au niveau des bords latéraux de cette dernière, ledit évidement cylindrique (12) matérialisant un logement affecté aux segments cylindriques (13) de plusieurs crampons (3).

2. Dispositif de serrage selon la revendication 1, **caractérisé par le fait que** le moyen de serrage est constitué d'une vis (14) qui traverse un trou oblong (15) pratiqué dans le crampon (3), et dont l'extrémité antérieure est logée dans un trou taraudé (16) de la mâchoire inférieure (2), de telle sorte que ledit crampon (3) puisse être guidé vers ladite mâchoire inférieure (2) par actionnement de la tête de ladite vis (14) qui est librement exposée à la face supérieure dudit crampon (3).

3. Dispositif de serrage selon l'une des revendications 1 ou 2, **caractérisé par le fait que** l'axe longitudinal du, ou de chacun des crampons (3) montés à pivotement sur la mâchoire inférieure (2), s'étend perpendiculairement à l'axe longitudinal du bord antérieur de ladite mâchoire inférieure (2).

4. Dispositif de serrage selon la revendication 3, **caractérisé par le fait que** l'axe longitudinal du trou oblong (15) d'un crampon (3), à travers lequel la vis ou une vis (14) est guidée, s'étend dans la direction longitudinale dudit crampon (3) et occupe une position centrale entre le segment cylindrique (13) et l'arête antérieure (17) dudit crampon (3).

5. Dispositif de serrage selon l'une des revendications 3 ou 4, **caractérisé par le fait que** les axes longitudinaux de l'arête antérieure (17) et du segment cylindrique (13) d'un crampon (3) s'étendent perpendiculairement à l'axe longitudinal de ce dernier.

6. Dispositif de serrage selon l'une des revendications 1 à 5, **caractérisé par le fait que** la partie antérieure d'un crampon (3) est délimitée par deux surfaces planes (18, 19) convergeant à angle aigu vers l'arête antérieure (17) ; et **par le fait que** ladite partie antérieure dudit crampon (3) se trouve au-dessus de la surface inclinée (8) de la mâchoire inférieure (2), l'inclinaison de ladite surface inclinée (8), et la forme de ladite partie antérieure, étant adaptées l'une à l'autre.

7. Dispositif de serrage selon la revendication 6, **caractérisé par le fait que** l'arête antérieure (17) du crampon (3) est arrondie, la section transversale de ladite arête antérieure (17) matérialisant un segment de cercle.

8. Dispositif de serrage selon l'une des revendications 6 ou 7, **caractérisé par le fait que** la face inférieure de la région marginale postérieure d'un crampon (3), qui se rattache au segment cylindrique (13), forme une butée (20) conçue pour limiter l'envergure d'ablocage dudit crampon (3).

9. Dispositif de serrage selon l'une des revendications 1 à 8, **caractérisé par le fait que** la distance, comprise entre la surface d'appui (10) de la mâchoire inférieure (2) et l'arête antérieure (17) du, ou de chaque crampon (3), est accrue en prévoyant un adaptateur (25) entre ladite mâchoire inférieure (2) et le, ou chaque crampon (3).

10. Dispositif de serrage selon la revendication 9, **caractérisé par le fait que** l'adaptateur (25) est relié rigidement à la mâchoire inférieure (2), sur laquelle il repose à plat ; et **par le fait que** le, ou chaque crampon (3) est monté à pivotement sur la face supérieure dudit adaptateur (25).

11. Dispositif de serrage selon l'une des revendications 9 ou 10, **caractérisé par le fait que** l'adaptateur (25) est pourvu d'une face frontale plane (30), qui matérialise une surface de butée dévolue à la pièce (11) reposant sur la surface d'appui (10).

12. Dispositif de serrage selon la revendication 11, **caractérisé par le fait que** l'adaptateur (25) comporte un aimant (31) librement exposé à la face frontale (30) dudit adaptateur (25).
